# EUROPEAN PATENT SPECIFICATION

(11) **EP 1 533 087 B1**
(45) Date of publication and mention of the grant of the patent: **06.04.2016**
(21) Application number: 04257102.6
(22) Date of filing: 16.11.2004
(51) Int. Cl.: B25J 9/16, G05B 19/4093

(54) **Operation program preparation device**
Vorrichtung zur Erstellung eines Betriebsprogramms
Appareil de préparation de programme d' opération

(30) Priority: 17.11.2003 JP 2003386969
(43) Date of publication of application: 25.05.2005
(73) Proprietor: FANUC CORPORATION, Oshino-mura Minamitsuru-gun Yamanashi 401-0597 (JP)
(72) Inventor: Watanabe, Atsushi, Tokyo, 168-0072 (JP); Nishi, Hiroji, Yamanashi, 401-0301 (JP)
(74) Representative: Haseltine Lake LLP

(56) References cited:
- EP-A- 0 852 346
- JP-A- 1 064 016
- JP-A- 7 295 618
- JP-A- 64 002 882
- US-A- 5 740 327
- US-A1- 2003 093 165

## Description

### BACKGROUND OF THE INVENTION

### 1. Field of the Invention

The present invention relates to an operation program preparation device for preparing an operation program for a robot to perform an operation on an object.

### 2. Description of Related Art

Industrial robots are utilized in a variety of production systems including spot welding, arc welding, assembling, etc. The industrial robot is generally designed to perform particular work on a workpiece to be worked, which is a robot operation object, by using an operational tool mounted to a wrist end of the robot. In spot welding, the operational tool is a spot welding gun, and the workpiece to be worked is a vehicle body or the like. In arc welding, the operational tool is an arc welding torch, and the workpiece includes metal sheets, etc. In assembly task, the operational tool is comprised of a grip hand, a nut-runner, or the like, and the workpiece includes machine parts or precision parts. Industrial robot operations are instructed by an operation program. In accordance with an operation program prepared to be suitable for operational tool, workpiece, and work content, the industrial robot is capable of performing various tasks, and much versatility is thereby realized.

Considering spot welding, for example, even when a different type of vehicle body to be welded is newly added, it is enough to newly generate a welding operation program conforming to vehicle body portions to be welded. When interference occurs between the spot welding gun of an existing shape and the workpiece or a jig at a vehicle body portion to be welded, a new spot welding gun serving as operational tool is fabricated and attached to the robot via a tool changer, so that spot welding guns may be changed according to the type of vehicle body, making it possible to handle different types of workpieces. In this case, a new operation program to handle the new spot welding gun and the new vehicle body must be prepared.

For operation program preparation, respective robot axes are manually moved at low speeds to move the operational tool to a position on the workpiece where an actual operation is to be made, and such position is input as a taught point. Respective axis values assumed at that time are stored as a working position on the workpiece in the robot, whereby a robot operation for that work is taught to the robot. Considering the case of spot welding, for instance, the teaching operation includes manually moving respective axes of a robot mounted with a welding gun to accurately position a welding tip of the welding gun to an operating position, i.e., a position on the vehicle body where spot welding is to be performed, and storing respective axis-values assumed by the robot at that time. Also known is a method for preparing an operation program offline by use of an automatic programming device, without the need of actually operating the robot.

As explained above, the industrial robot has a flexibility capable of being adapted to perform an operation for a newly added workpiece by preparing a new operational tool and/or a new operation program, without the need of redesigning the robot. To change the operating position, it is enough to perform a teaching operation to change or add a taught point. This flexibility is an advantage of the industrial robot, as compared to a special purpose machine designed to perform work on a particular workpiece by using a particular operational tool. In this point, the industrial robot is an indispensable production machine for multi-kind and small-quantity production.

The flexibility of industrial robots is realized mainly by means of operational tools that are capable of being changed according to type of workpiece and content of work, operation programs whose content is variable according to content of work, and teaching operations that enable the robot to store work positions on a workpiece. The existing flexibility of industrial robots is sufficient so long as there are not so many types of workpiece. Recently, however, it becomes much difficult for production systems in factories to meet increasingly diversified consumer needs for industrial products. In highly automated systems not relying on human intervention, the addition of a different product type requires much labor for review of production systems, redesigning of hardware including jig, machine, conveyor, etc., and preparation of software including machining programs for processing machines, operation programs for industrial robots, sequence ladder programs for programmable logic controllers (PLCs), production management programs for production management systems, etc. Thus, a major problem to be solved in automated production systems is to reduce man-hours at the time of a new product type being added. Reduction in man-hours has also been desired for industrial robots used in automated production systems, since there is much work such as operation program preparation and teaching operation in order to meet the addition of a new product type.

JP 01064016 discloses a robot teaching system for producing robot command data at the outside of a robot work station by registering the relationship between the action contents of a robot and the CAD data on the variable of the robot working position in the form of a pattern.

EP 0852346 discloses a robot language processor comprising a display device capable of graphic display and capable of designating a position in a display screen by a pointing device, a memory for storing a robot program, and a graphical language processing portion for displaying a work zone and an air cut zone as a continuous line on the display device by looking up the robot program, and displaying the kind of the work content on a line on the display screen when such a line under display on the display screen is designated by the pointing device, so as to allow robot teaching on the basis of a graphical user interface.

### SUMMARY OF THE INVENTION

The present invention provides an operation program preparation device capable of reducing labor and cost for preparation of a robot operation program.

According to an aspect of the present invention, there is provided an operation program preparation device as defined in claim 1.

The object-type related data may be prepared based on drawing data of the object or based on an image of the object captured by a camera.

According to the present invention, an operation program of an industrial robot for a new type of object is easily prepared by only inputting object-type related data for the new type of the object. Therefore, a production system using an industrial robot can be easily adapted for multi-type production, and it is made possible to open the way to automation and robotization of a production system which has been considered to be difficult to be automated and hence relies on manual operation.

### BRIEF DESCRIPTION OF THE DRAWINGS

FIG. 1 is a schematic view showing the entire of a production system using a robot to which is applied an operation program prepared by an operation program preparation device according to one embodiment of the present invention;
FIG. 2 is a block diagram of a control system of the production system;
FIG. 3 is a flowchart of operation of the production system;
FIG. 4 is a detailed flowchart of operation at Step 107 of the flowchart shown in FIG. 3;
FIG. 5 is a flowchart following FIG. 4;
FIG. 6 is a flowchart following FIG. 5;
FIG. 7 is an explanatory view for explaining part of a travel path of an operational tool 2 in an example of operation of a robot 1;
FIG. 8 is an explanatory view, following FIG. 7, of a travel path of the operational tool 2;
FIG. 9 is an explanatory view, following FIG. 8, of a travel path of the operational tool 2;
FIG. 10 is an explanatory view of the position/orientation of the operational tool at the time of operation of taking out a workpiece to be worked from a pallet; and
FIG. 11 is an explanatory view of the position/orientation of the operational tool at the time of operation of taking out a different workpiece from a pallet.

### DETAILED DESCRIPTION

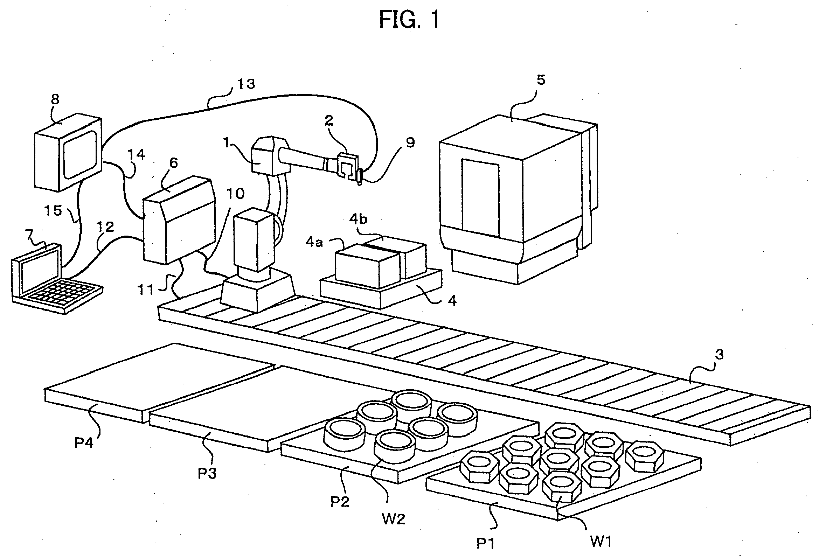

FIG. 1 is a schematic view showing the entire of a production system using a robot to which is applied an operation program prepared by an operation program preparation device according to an embodiment of the present invention. Reference numeral 1 denotes an industrial robot having a wrist end thereof to which an operational tool 2 is attached. Symbols P1, P2, P3, and P4 respectively denote pallets on which workpieces W1 or W2 as objects of operation by the robot 1 are placed. On the pallet P1, workpieces W1 are placed. On the pallet P2, workpieces W2 different in type from the workpieces W1 are placed. The robot 1 is installed on a travel axis 3, and adapted to move along the travel axis 3. The robot 1 grips a workpiece W1 on the pallet P1 or workpiece W2 on the pallet P2 with the operational tool 2, and temporally places the workpiece on a temporarily placing table 4. When a processing machine 5 for machining workpieces is not in operation, the robot 1 grips the workpiece W1 or W2 placed on the temporarily placing table 4, attaches the same to the processing machine 5, and outputs a machining command to the processing machine 5. In response to the machining command, the processing machine 5 starts machining the workpiece. After finishing the machining, the processing machine 5 outputs a machining completion signal to the robot 1. When receiving the machining completion signal, the robot 1 takes out the machined workpiece W1 or W2 from the processing machine 5, and places the workpiece on the pallet P3 if it is W1 or places on the pallet P4 if it is W2. The robot 1 and the travel axis 3 are respectively connected through communication cables 10 and 11 to a controller 6 for controlling operations of the robot 1 and the travel axis 3. The controller 6 is connected through a network cable 12 to an operation program preparation device 7. A camera 9 is attached to the wrist end of the robot 1, and connected through a camera cable 13 to an image processing device 8 which in turn connected to the controller 6 and the operation program preparation device 7 via network cables 14 and 15, respectively. The temporarily placing table 4 is mounted with a positioning jig 4a for the workpiece (W1) taken out of the pallet P1 and a positioning jig 4b for the workpiece (W2) taken out of the pallet P2. The positioning jigs 4a, 4b are connected to the controller 6 via a digital signal input cable.

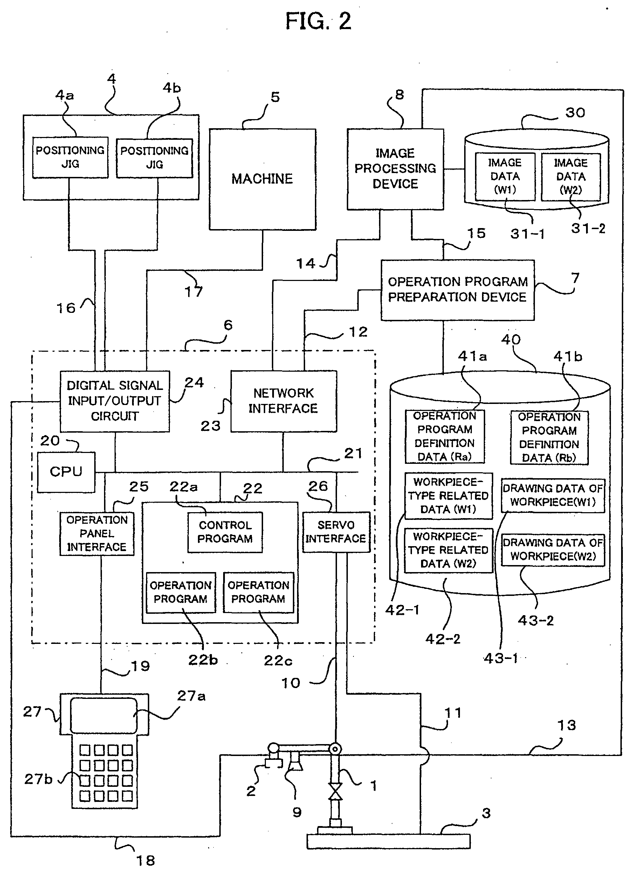

FIG. 2 is a block diagram mainly showing essential part of a control system of the production system in which the aforementioned robot is used. The controller 6 includes a CPU 20, a memory 22, a network interface 23, a digital signal input/output circuit 24, an operation panel interface 25, and a servo interface 26. In the memory 22, a control program 22a executed by the CPU 20 to control the entire of the controller is stored, and operation programs 22b, 22c are also stored. The operation program 22b is used by the robot 1 to perform work on the workpiece W1 with the operational tool 2, and the operation program 22c is used by the robot 1 to perform work on the workpiece W2 with the operational tool 2. Both the operation programs 22b, 22c are interpreted by the control program 22a and converted into movements of the robot 1 and the operational tool 2. The operation programs 22b, 22c are prepared in advance by means of the operation program preparation device 7.

The operation program preparation device 7 is connected to the network interface 23 via the network cable 12, and the image processing device 8 is also connected to the network interface 23 via the network cable 14. The digital signal input/output circuit 24 of the controller 6 is connected to the processing machine 5 and the operational tool 2 attached to the robot 1 by the digital signal input/output cables 17 and 18, and is also connected by the digital signal input/output cables 16 to the jigs 4a, 4b mounted on the temporarily placing table 4.

A teaching operation panel 27 is connected to the operation panel interface 25 by a cable 19, and is provide with a display 27a and input buttons 27b. An operator is enabled to operate the robot 1 through the controller 6 by operating the teaching operation panel 27.

The servo interface 26 is connected by communication cables 10, 11 to servomotors for respective robot axes and for the travel axis 3.

The operation program preparation device 7 is provided with a hard disk device 40 in which operation-program definition data and workpiece-type related data are stored. In this embodiment, there are two operation paths. A first operation path Ra is one in which the workpiece on the pallet P1 is taken out by the robot 1, is positioned on the temporarily placing table 4 by the positioning jig 4a, and is mounted to and machined by the processing machine 5, and the machined workpiece is taken out and placed on the pallet P3. A second operation path Rb is one in which the workpiece on the pallet P2 is taken out by the robot 1, is positioned on the temporarily placing table 4 by the positioning jig 4b, and is mounted to and machined by the processing machine 5, and the machined workpiece is taken out and placed on the pallet P4. For the respective operation paths Ra and Rb, operation-program definition data 41a, 41b are stored. For respective workpieces W1, W2, W3, ---, workpiece-type related data are stored (in FIG. 2, workpiece-type related data only for two types of workpiece are shown at 42-1, 42-2). Further stored are drawing data 43-1, 43-2 for the workpieces W1, W2, respectively.

The operation-program definition data 41 a, 41b are each constituted by a first program part associated with work operations varying depending on the type of workpiece to be worked, which is the operation object of the robot 1, and a second program part associated with work operations kept unchanged without regard to a change in workpiece type. The first program part varying depending on workpiece is changed according to the workpiece-type related data stored corresponding to each workpiece, whereby the robot operation program is completed.

The details of the operation-program definition data 41 a, 41b and the workpiece-type related data for individual workpieces will be mentioned later.

Further connected to the image processing device 8 is a hard disk device 30 that stores image data of workpieces serving as reference used to detect the workpiece to be worked. In this embodiment, assuming that the operation is performed on the workpieces W1 and W2, image data 31-1 for workpiece W1 and image data 31-2 for workpiece W2 are stored, which are obtained by picking up images of the workpieces W1, W2 by means of the camera 9 attached to the wrist end of the robot 1.

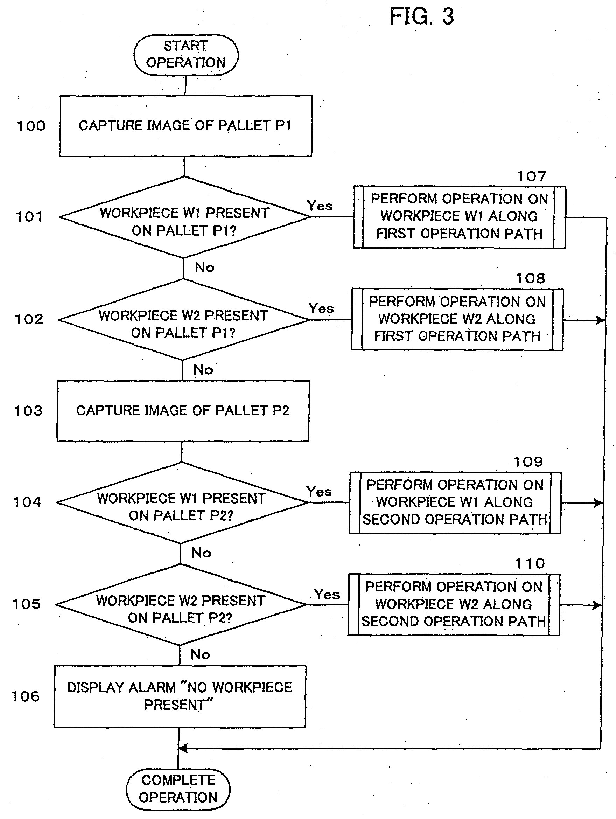

FIG. 3 is a flowchart showing a series of steps of operation performed by the aforementioned robot system.

At first, the positioning jig 4a used for the workpiece taken out of the pallet P1 (for the first operation path Ra) is set, and the positioning jig 4b for the workpiece taken out of the pallet P2 (for the second operation path Rb) is set. The processing machine 5 is configured to select and execute a machining program used to machine the workpiece corresponding to the machining command which is associated with the operation path Ra or Rb. In the following, an explanation will be given by taking as example a case where the workpiece W1 is placed on the pallet P1 and transported and machined according to the first operation path Ra. In this case, the jig for positioning the workpiece W1 is mounted on the temporarily placing table 4, and the processing machine 5 is configured to select a machining program to machine the workpiece W1 in response to the machining command corresponding to the first operation path Ra.

The travel axis 3 is operated and the robot 1 is thereby moved close to the pallet P1 to move the camera 9 right above the pallet P1. The camera 9 captures an image of the pallet P1 (Step 100).

The picked-up image is analyzed by the image processing device 8 based on the reference image data 31-1 to determine the presence or absence of the workpiece W1 (Step 101). If the workpiece W1 is not detected, the picked-up image is compared with the reference image data 31-2 for the workpiece W2, thereby determining the presence or absence of workpiece (Step 102). If the image data of the workpiece W1 is detected in the picked-up image, the robot 1 is moved close to the pallet P2 and the camera 9 captures an image of the pallet P2 (Step 103). The picked-up image is analyzed by the image processing device 8 to determine whether an image of the workpiece W1 corresponding to the image data 31-1 is present in the picked-up image (Step 104). If not, a further determination is made whether an image of the workpiece W2 corresponding to the image data 31-2 is present (Step 105). If not, an alarm such as for example a message that "no workpiece is present" is displayed on a display unit of the controller or the display 27a of the teaching operation panel 27, whereupon the operation is finished (Step 106).

If it is determined at Step 101 that the workpiece W1 is present on the pallet P1, the operation on the workpiece W1 according to the first operation path Ra is started (Step 107). If it is determined at Step 102 that the workpiece W2 is present on the pallet P1, the operation on the workpiece W2 according to the first operation path Ra is started (Step 108). Similarly, if it is determined at Step 104 that the workpiece W1 is present on the pallet P2, the operation on the workpiece W1 according to the second operation path Rb is started (Step 109). If it is determined at Step 105 that the workpiece W2 is present on the pallet P2, the operation on the workpiece W2 according to the second operation path Rb is started (Step 110).

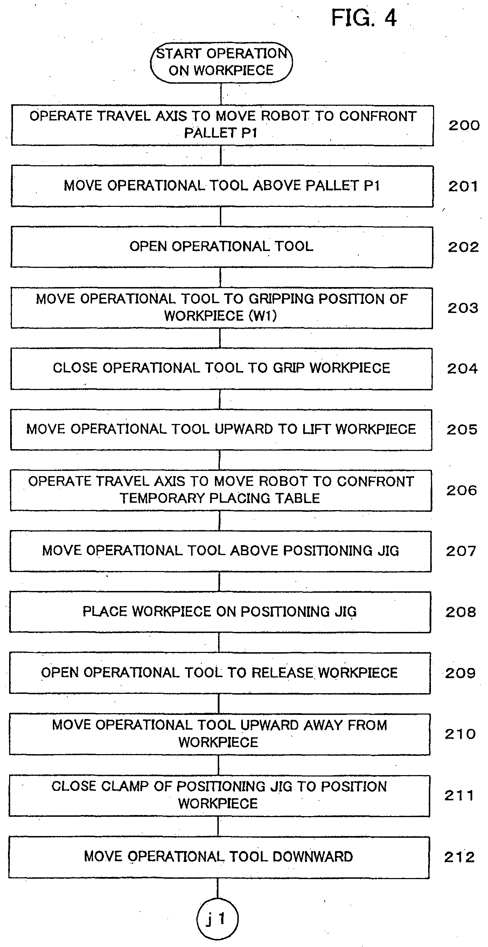

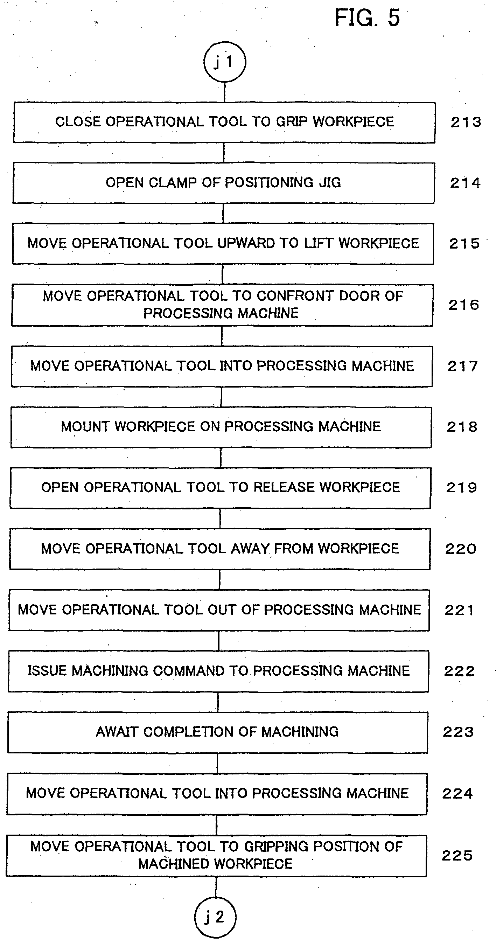

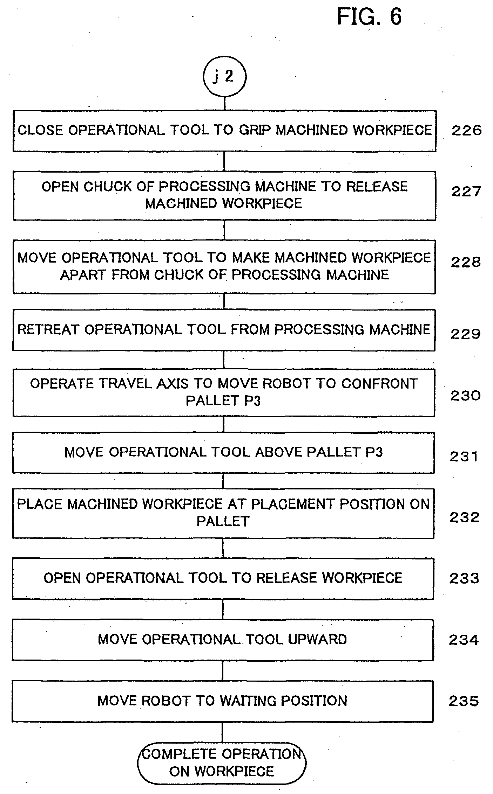

FIGS. 4-6 are flowcharts showing procedures at Step 107 to perform operations of transporting and machining along the first operation path Ra.

The travel axis 3 is operated to move the robot 1 to confront the pallet P1 (Step 200).

The arm of the robot 1 is turned to move the operational tool 2 right above the pallet P1 (Step 201).

The digital signal input/output circuit 24 is operated so that a digital signal representative of a command to open the hand is output to the operational tool 2, whereby pawls of the operational tool 2 are opened (Step 202).

Next, the operational tool 2 is moved to a position for gripping the workpiece W1. In this case, the operational tool is necessarily moved to a position slightly above the position for gripping the workpiece W1, and is then moved downward to the gripping position. As for a position where the workpiece is to be taken out of the pallet P1, an amount of shift from a taught reference position is determined beforehand in a conventional manner based on a counter value which is incremented each time a workpiece is taken out. On the basis of the counter value, workpieces are taken out of the pallet P1 in sequence (Step 203).

Then, the digital signal input/output circuit 24 is operated so that a digital signal serving as a command to close the hand is output to the operational tool 2, whereby the pawls of the operational tool 2 are closed to grip the workpiece W1 (Step 204).

The operational tool 2 is moved upward to lift the workpiece W1. At this time, the operational tool 2 is moved upward a little bit at low speed, and is then moved upward at increased speed to further lift the workpiece W1 upward (Step 205).

The arm of the robot 1 is turned from the left side to the right of the robot and at the same time the travel axis 3 is operated, thereby moving the robot 1 to confront the temporarily placing table 4 (Step 206).

Next, the operational tool 2 is moved right above the positioning jig 4a (Step 207).

The operational tool 2 is moved downward, and the workpiece W1 is mounted to the positioning jig 4a. At this time, the workpiece W1 is moved above the positioning jig 4a, and is moved directly downward at low speed, whereby the workpiece W1 is placed on the positioning jig 4a (Step 208).

Next, the digital signal input/output circuit 24 is so operated that a digital signal serving as a command to open the hand is output to the operational tool 2, and the pawls of the operational tool 2 are thereby opened to release the workpiece W1 (Step 209).

The operational tool 2 is slightly moved upward and separated from the positioning jig 4a (Step 210).

The digital signal input/output circuit 24 is operated so that a digital signal serving as a command to close a clamp is output to the positioning jig 4a, whereby a clamp of the positioning jig 4a is closed, and the workpiece W1 mounted to the jig is accurately positioned (Step 211).

The operational tool 2 is moved directly downward to a position where it can grip the workpiece W1 (Step 212).

The pawls of the operational tool 2 are closed and the workpiece W1 is gripped (Step 213).

The clamp of the positioning jig 4a is opened (Step 214).

The operational tool 2 is moved upward to lift the workpiece W1. At this time, the workpiece W1 is obliquely moved upward at low speed with respect to an abutment face of the positioning jig 4a, is slightly moved upward, and is further moved upward at increased speed (Step 215).

The arm of the robot 1 is turned, so that the operational tool 2 is moved to confront a door of the processing machine 5 (Step 216).

The operational tool 2 is moved to enter the interior of the processing machine 5 through the door opening of the processing machine 5. At this time, the arm of the robot 1 enters straight the processing machine such that the operational tool 2 and the workpiece W1 are not in contact with the inside of the processing machine (Step 217).

The workpiece W1 is mounted to a chuck of the processing machine 5. At this time, the workpiece W1 is temporally stopped slightly short of the chuck, and is then mounted to the chuck at low speed. After the workpiece being mounted, a signal serving as a command to close the chuck is output from the digital signal input/output circuit 24 to the processing machine 5, and the processing machine 5 operates to close the chuck (Step 218).

Next, the pawls of the operational tool 2 are opened to release the workpiece W1 (Step 219).

The operational tool 2 is slightly moved away from the workpiece W1 at low speed (Step 220).

The operational tool 2 is pulled out from the interior of the processing machine 5. In this case, the arm of the robot 1 is straightened and pulled out through the door opening of the processing machine 5 such that the operational tool 2 is not in contact with the inside of the processing machine 5 (Step 221).

A digital signal serving as a command to start machining the workpiece W1 in accordance with the first operation path Ra is output to the processing machine 5 (Step 222).

The controller 6 awaits for receipt of a digital signal supplied from the processing machine 5 and indicating that the machining the workpiece W1 is finished (Step 223).

The operational tool 2 is caused to enter the interior of the processing machine 5 (Step 224).

The operational tool 2 is moved to a position where it grips the machined workpiece W1 (Step 225).

The pawls of the operational tool 2 are closed to grip the workpiece W1 (Step 226).

A digital signal serving as a command to open the chuck is output to the processing machine 5, whereby the chuck of the processing machine 5 is opened (Step 227).

The operational tool 2 is slightly moved to remove the workpiece W1 from the chuck of the processing machine 5. At this time, the workpiece W1 must be taken out straight from the chuck (Step 228).

The operational tool 2 is retreated from the interior of the processing machine 5 (Step 229).

The arm of the robot 1 is turned to the right of the robot, and at the same time the travel axis 3 is operated to move the robot 1 to confront the pallet P3 (Step 230).

The operational tool 2 is moved right above the pallet P3 (Step 231).

The workpiece W1 is placed on a placement position on the pallet P3. In this case, the operational tool 2 is temporally stopped at a location slightly above the placement position, and is moved straight downward at low speed to place the workpiece W1 on the pallet P3. The workpiece orientation at the time of placing the workpiece on the pallet P3 is determined depending on workpiece type. In other words, the placing operation is a workpiece type-dependent operation. As in the case of taking out from a pallet, the position where the workpiece is to be placed is determined in accordance with an amount of shift from a reference position that is determined by taking into account of the number of already placed workpieces counted up by a counter, and the workpiece is placed on the determined position (Step 232).

The pawls of the operational tool 2 are opened to release the workpiece W1 (Step 233).

The operational tool 2 is moved upward. More specifically, the operational tool is moved straight upward at low speed, and is further moved upward at increased speed (Step 234).

The arm of the robot 1 is turned to in front of the robot, and at the same time the travel axis 3 is operated to move the robot 1 to a waiting position (Step 235).

In the above, the procedures of processing of workpieces based on the operation program 22b in accordance with the operation path Ra have been described.

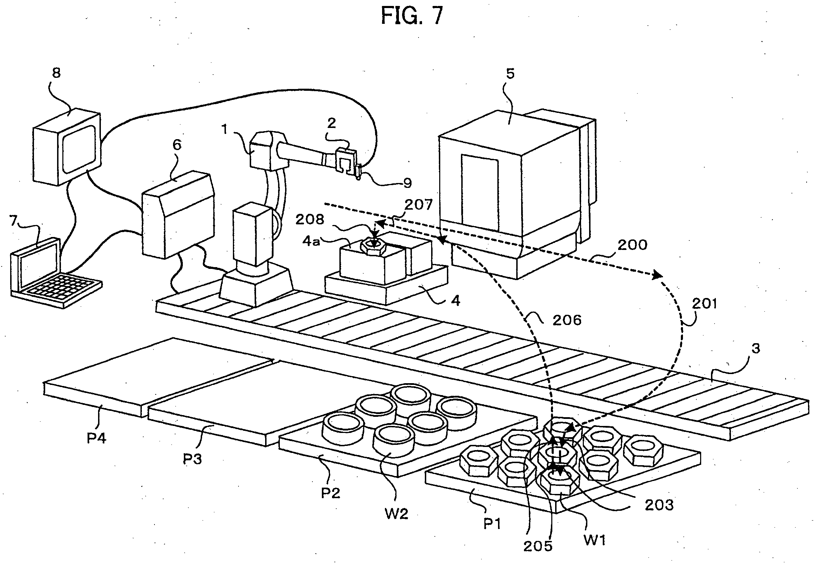

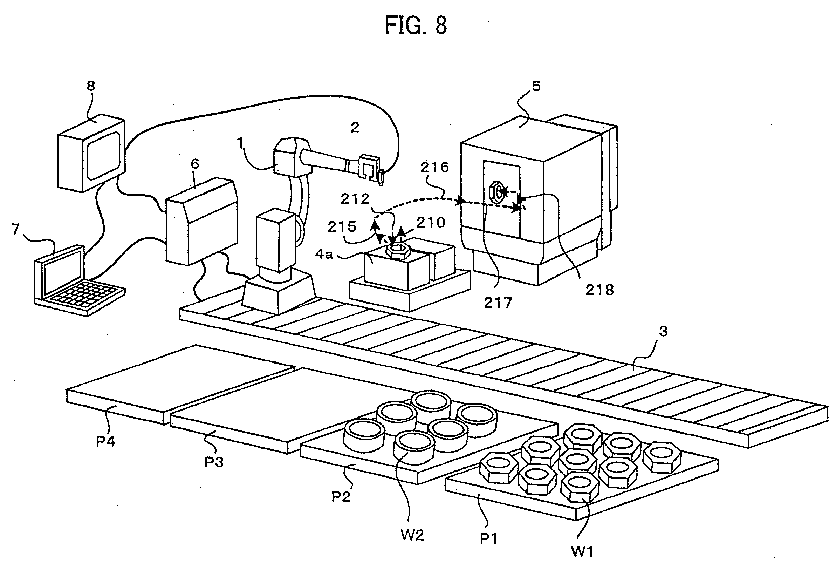

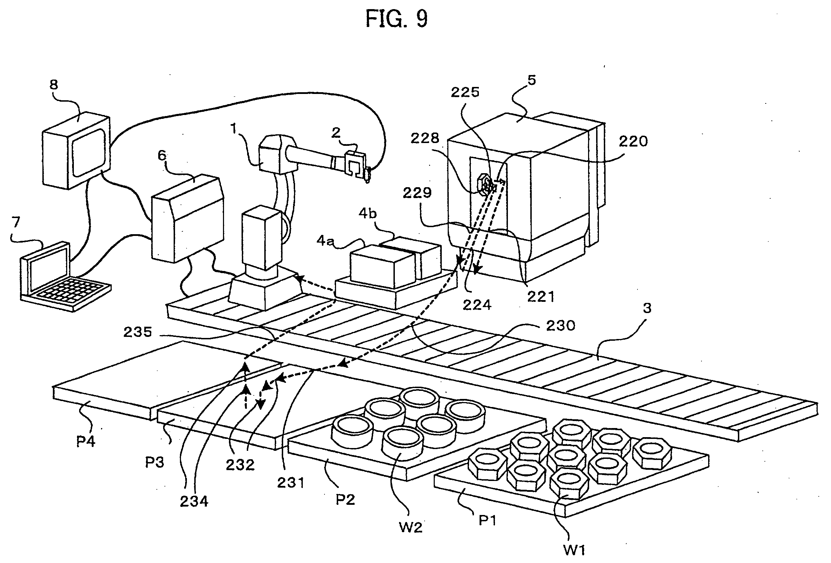

FIGS. 7-9 show travel paths of the operational tool 2 of the robot 1 during the time the operation from the aforesaid Step 200 to Step 235 is performed. Among these travel paths, only the travel paths for Steps 203 and 232 are workpiece-dependent travel paths. The other travel paths are independent of workpiece type. For example, the travel paths other than the travel paths associated with Steps 203 and 232 are kept unchanged, even if workpieces W2 are placed on the pallet P1.

In accordance with the ,first operation path Ra, each of workpieces carried in by the pallet P1 is taken out, is positioned by the positioning jig 4a of the temporarily placing table 4, and is carried into and machined by the processing machine, and the machined workpiece is placed on the pallet P3. In this case, the temporarily placing table 4 is mounted with a jig corresponding to the workpieces placed on the pallet P1, serving as the positioning jig 4a, and the processing machine 5 is configured such that a machining program to be used for machining workpieces placed on the pallet P1 is selected in response to a machining command supplied from the controller 6 of the robot during the time the operational processing is performed according to the first operation path Ra. As for the work operation of the robot, the position/orientation at the time of a workpiece being gripped and taken out of the pallet P1 at Step 203 and the position/orientation at the time of an already machined workpiece being placed on the pallet P3 at Step 232 are varied depending on workpiece type.

In this embodiment, operation-program definition data 41 a for the first operation path Ra includes fixed parts corresponding to part of the work operation independent of workpiece type, and variable part varying in dependence on workpiece type. The fixed part is fixedly input to the operation program preparation device 7, and the variable part is input to the device 7 so as to be variable according to workpiece to be worked. The operation-program definition data 41 a is then stored in the hard disk device 40. Similarly, as for the work operation to be performed in accordance with the second operation path Rb in which each of workpieces carried in by the pallet P2 is taken out, is positioned by the positioning jig 4b of the temporarily placing table 4, and is carried into and machined by the processing machine 5, and the machined workpiece is placed on the pallet P4, the work operation is divided into part independent of workpiece type and part varying in dependence on workpiece type. For the second operation path Rb, the operation-program definition data 41b whose part corresponding to the work operation part varying depending on workpiece type is made variable is input to the operation program preparation device 7 and stored in the hard disk device 40.

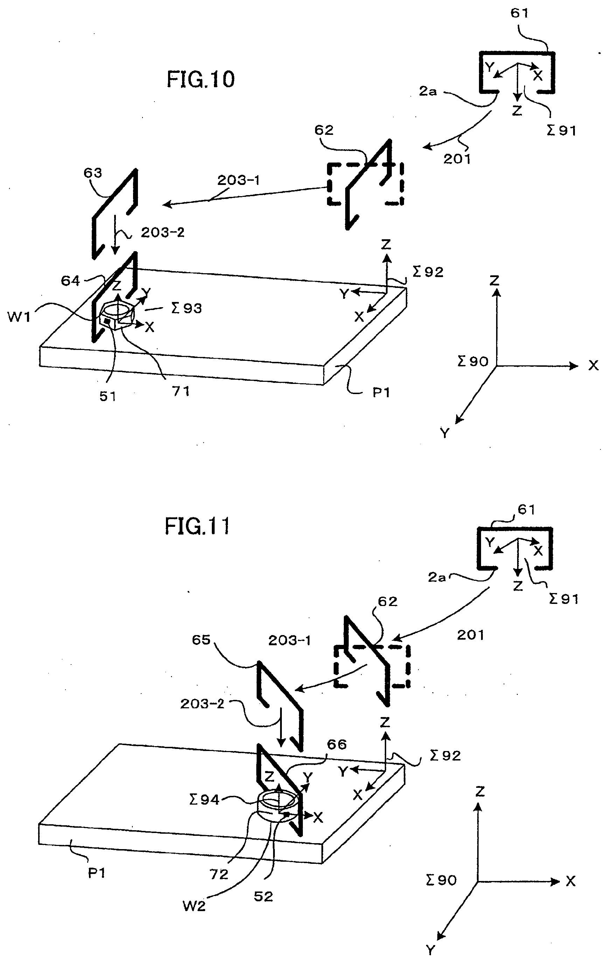

FIGS. 10 and 11 show what difference is there between travel paths at Steps 201, 203 for handling the workpiece W1 and those for handling the workpiece W2. FIG. 10 shows travel paths at Steps 201, 203 for workpiece W1, and FIG. 11 shows travel paths at Steps 201, 203 for workpiece W2. The operational tool 2 is a two-finger grip hand.

In FIG. 10, reference numeral 51 denotes a position where the operational tool 2 is enabled to grip the workpiece W1. This grip position 51 is generally represented by a three-dimensional position in a coordinate system ∑93 determined on the workpiece. Reference numeral 71 denotes a placement position on the pallet P1 where the workpiece W1 is placed. The placement position 71 is represented by a three-dimensional position in a coordinate system ∑92 determined on the pallet P1. In FIGS. 10 and 11, tool positions 61, 62, 63, 64, and 65 indicate positions assumed by the operational tool 2 at Steps 201 and 203. Each position of the operational tool 2 is represented by a three-dimensional position in a world coordinate system ∑90 usually determined to have its origin at a particular position in a mechanism section of the robot. First, at Step 200, the operational tool 2 of the robot 1 is positioned at the tool position 61. At next Step 201, the operational tool is moved to the tool position 62 that is one adequately spaced upward from the pallet P1 and independent of workpiece type. As mentioned later, the orientation of the operational tool 2 at that position is sometimes changed in accordance with a prescribed rule. In the example shown in FIGS. 10 and 11, a state where the orientation remains unchanged is shown by a dotted line, and a state where the orientation is changed is shown by a solid line. As shown in Fig. 10, Step 203 includes Step 203-1 for making a motion to the tool position 63 adequately close to and right above the workpiece W1, and Step 203-2 for making a motion to the tool position 64 close to the position 51 where the workpiece W1 is grippable by the operational tool 2. Step 203 depends on workpiece type.

In FIG. 11, travel paths at Steps 201 and 203 for handling the workpiece W2 are shown. A position 52 where the operational tool 2 is enabled to grip the workpiece W2 is represented by a three-dimensional position in a coordinate system ∑94 determined on the workpiece. A placement position 72 on the pallet P1 where the workpiece W2 is placed is represented by a three-dimensional position in the coordinate system ∑92 on the pallet. As in the case of handling the workpiece W1, a motion from the tool position 61 to the tool position 62 is made at Step 201, and a motion from the tool position 62 to the tool position 65 and to the tool position 66 is performed at Step 203. Here, the travel path from the tool position 61 to the tool position 62 is independent of workpiece type or common to any workpiece type, and is the same as the position shown in FIG. 10. In FIG. 10, the travel path extends from the tool position 62 to the tool position 63 and to the tool position 64. Such travel path is required only for the workpiece W1 and must be prepared on the basis of the grip position 51 and the placement position 71 for the workpiece W1. The travel path shown in FIG. 11 and extending from the tool position 62 to the tool position 65 and to the tool position 66 is required only for the workpiece W2 and must be prepared based on the grip position 52 and the placement position 72 for the workpiece W2.

The operational tool 2 at the tool position 62 is the same in position between FIGS. 10 and 11, but is different in orientation between FIGS. 10 and 11. This is because the operational tool must assume, at the tool position 62, the same orientation as that to be assumed at the tool position 63 or 65. By changing the tool orientation during the relatively long-distance movement from the tool position 61 to the tool position 62, it is possible to moderate a speed of change in orientation. When such orientation change is not performed until the tool position 62 is reached (as shown by dotted line), the orientation of the operational tool 2 must be changed during the short-distance movement to the tool position 63 or 65, and hence the change in orientation is made at an abrupt speed. When the speed of change in orientation exceeds the operation speed of the robot 1, the operational tool fails to assume the required or correct tool orientation at the tool position 63 or 65, and is moved in this state to the tool position 64 or 66 where it must grip the workpiece. Thus, the operational tool can collide with the workpiece. This indicates that position data associated with the tool orientation at the tool position 62 must be corrected according to the workpiece, in order to connect the travel path at Step 201 independent of workpiece type with the travel path at Step 203 dependent on workpiece type.

In this embodiment, therefore, a predetermined rule is set in advance in the operation program preparation device 7 and stored in storage means, in order to prevent occurrences of interference with others at a connection between the travel path independent of workpiece type and the travel path dependent on workpiece, to prevent a stroke limit of the robot from being exceeded at the connection therebetween, to prevent a maximum travel speed of the robot from being exceeded, and to achieve without fail a shift to the desired orientation of the operational tool 2 varying depending on workpiece type. By way of example, it is preferable to apply a rule such that, when the motion distance is the same between Steps 201 and 203-1, the orientation at the tool position 62 is determined to be equal to the middle of the orientation at the tool position 61 and the orientation at the tool position 63 (or tool position 65), whereby a change in position is moderated. In this embodiment, there is a first rule that, if at least one of amounts of change in W, P, and R per second exceeds the maximum operating speed of the robot, then the orientation of the operational tool at the tool position 62 in FIG. 10 or 11 is made equal to the orientation at the time of gripping the workpiece (i.e., the orientation at the tool position 63 or 65), as shown by solid line. The amounts of change in robot wrist axes W, P, and R per second are determined from an amount of change in orientation of the operational tool 2 or amounts of change in robot wrist axes W, P, and R from the tool position 62 to the tool position 63 or 65, and operating speeds. A second rule is that, if the first rule is not applied and if an amount of change in orientation from the tool position 61 to the tool position 63 or 65 exceeds 180 degrees or more, specifically, if at least one of amounts of change in W, P, and R exceeds 180 degrees, then the orientation at the tool position 62 is changed to be equal to the middle of the orientation at the tool position 61 and the orientation at the tool position 63 or 65. In other cases, the orientation at the tool position 62 is made equal to the tool orientation at the tool position 61, as shown by dotted line in FIGS. 10 and 11, without making any change in orientation.

Depending on the workpiece to be worked, there is sometimes a case where an obstacle in the travel path from the tool position 62 fixedly determined without regard to the workpiece to the tool position 63 or 65 determined depending on the workpiece, or a case where the operating limit of the robot 1 is reached during the motion along the travel path. In addition, the tool position 63 or 65 where the motion toward the workpiece is started must generally be located slightly above the workpiece, and the tool position 62 associated with the tool position 63 or 65 must be located above the tool position 63 or 65 in order to prevent the operational tool from being brought in contact with the workpiece. To this end, further prescribed is a rule that, if a comparison between a Z-axis coordinate of the tool position 63 or 65 and that of the tool position 62 indicates that the Z-axis coordinate of the tool position 62 is smaller than that of the tool position 63 our 65, then the Z-axis coordinate position of the tool position 62 is changed to be equal to the Z-axis coordinate of the tool position 63 or 65.

The following is part of an example of the operation-program definition data used for transporting and machining the workpiece in accordance with the first operation path Ra. This example is definition data for operation program to perform processing from Step 200 to Step 203.
1: Each axis position [1] 100% smooth 100
2: Each axis position [2] 100% smooth 100
3: RDO [1] = ON
4: Await for RDI [1] = ON
5: Straight line %WorkApproachPos% 1000 mm/sec positioning
6: Straight line %WorkGripPos% 200 mm/sec positioning
7: Position [1] {X = 1688.40 mm, Y = 30.30 mm, Z = 1331.45 mm, W = 64.62 deg, P = -85.60 deg, R = 116.35 deg};
8: Position [2] {X = 1679.51 mm, Y = -17.91 mm, Z = 1316.07 mm, W = 64.62 deg, P = -85.60 deg, R = 116.35 deg};

The numeral shown before the colon (:) in each line indicates a line number. Described in the first line is the definition data for Step 200, which is a command to perform a smooth movement to the next position at a maximum speed 100% (without making positioning). Described in the second line is the definition data for Step 201, which is a command to perform a similar movement. Described in the third and fourth lines are the definition data for Step 202, which are a command to open the hand of the operational tool and a command to await for the completion of the hand being opened, respectively. Described in the fifth and sixth lines are the definition data for Steps 203-1 and 203-2, which are commands to grip the workpiece, and are parts that can be changed according to workpiece type. Described in the seventh line is one representing a target position of the operational tool 2 at Step 200, i.e., the tool position 61 in FIGS. 10 aid 11, wherein W, P, and R represent rotation angles of the wrist axes of the robot, respectively. Described in the eighth line is one representing a target position of the operational tool 2 at Step 201 or the tool position 62 in FIGS. 10 and 11. In the operation-program definition data, part in between percent symbols (%) represents undefined data. Specifically, the undefined data enclosed between the percent symbols (%) in the operation-program definition data are part that are dependent on workpiece type and that are defined according to workpiece-type related data 42-1 and 42-2 that are prepared for each workpiece.

As the workpiece-type related data 42-1 (42-2), the hard disk device 40 connected to the operation program preparation device 7 is stored with ones which are such as for example as follows:
%WorkApproachPos% {X = 1679.51 mm, Y = -17.91 mm, Z = 1416.07 mm, W = 29.18 deg, P = -88.69 deg, R = 150.21 deg}
%WorkGripPos% {X = 1679.51 mm, Y = -17.91 mm, Z = 1316.07 mm, W = 29.18 deg, P = -88.69 deg, R = 150.21 deg}

The labels of %WorkApproachPos% and %WorkGripPos% indicate the tool positions 63 and 64 in FIG. 10, respectively.

The operation program preparation device 7 prepares only that program part of the operation-program definition data 41a which is independent of the workpiece, thereby obtaining the following operation program:
Each axis position [1] 100% smooth 100
Each axis position [2] 100% smooth 100
RDO [1] = ON
Await for RDI [1] = ON
Position [1] {X = 1688.40 mm, Y = 30.30 mm, Z = 1331.45 mm, W =64.62 deg, P = -85.60 deg, R = 116.35 deg};
Position [2] {X = 1679.51 mm, Y =-17.91 mm, Z = 1316.07 mm, W = 64.62 deg, P =-85.60 deg, R = 116.35 deg};

Next, the workpiece-dependent program part of the operation-program definition data 41 a is prepared referring to workpiece-type related data 42-1 that corresponds to the workpiece W1 detected at Step 101, whereby the following operation program is obtained.
Straight line position [3] 1000 mm/sec positioning
Straight line position [4] 200 mm/sec positioning
Position [3] {X = 1679.51 mm, Y = -17.91 mm, Z = 1416.07 mm, W = 29.18 deg, P = -88.69 deg, R = 150.21 deg}
Position [4] {X = 1679.51 mm, Y = -17.91 mm, Z = 1316.07 mm, W = 29.18 deg, P = -88.69 deg, R = 150.21 deg}

The thus obtained two operation programs are combined into one, to complete the operation program. At this time, processing to change the tool orientation, height position, etc. at position [2], which is the position of a connection between travel paths, is performed in accordance with the aforesaid rules, whereby the following operation program is obtained, which is an example where the processing to change the values W, P, and R of tool orientation at position [2] so as to be equal to those at position [3].
Each axis position [1] 100% smooth 100
Each axis position [2] 100% smooth 100
RDO [1] = ON
Await for RDI [1] = ON
Straight line position [3] 1000 mm/sec positioning
Straight line position [4] 200 mm/sec positioning
Position [1] {X = 1688.40 mm, Y = 30.30 mm, Z = 1331.45 mm, W = 64.62 deg, P = -85.60 deg, R = 116.35 deg};
Position [2] {X = 1679.51 mm, Y = -17.91 mm, Z = 1316.07 mm, W = 29.18 deg, P = -88.69 deg, R = 150.21 deg};
Position [3] {X = 1679.51 mm, Y = -17.91 mm, Z = 1416.07 mm, W = 29.18 deg, P = -88.69 deg, R = 150.21 deg}
Position [4] {X= 1679.51 mm, Y= -17.91 mm, Z= 1316.07 mm, W = 29.18 deg, P = -88.69 deg, R = 150.21 deg}

The operation-program definition data 41a and 41b, which defines the work operation in such a manner that the operation program part dependent on workpiece type can be altered as mentioned above, is stored in the hard disk drive 40 connected to the operation program preparation device 7. The part varying in dependence of workpiece type is stored as the workpiece-type related data 42-1 and 42-2 for respective workpieces.

As for those parts of the workpiece-type related data used to determine workpiece type-dependent work operations of the robot, positions/orientations of the operational tool may be input and stored one by one. Alternatively, those parts may be automatically prepared by the operation program preparation device 7 on the basis of CAD data and image data of workpieces.

Specifically, drawing data of workpieces W1, W2, and the like are prepared by means of ordinary two dimensional/three dimensional CAD, and are input to the operation program preparation device 7. The workpiece drawing data are DXF file format used for example in AutoCAD, and the like. In the workpiece drawing data, pieces of information on the grip position 51 for workpiece W1, the grip position 52 for workpiece W2, the placement position 71 of workpiece W1, and the placement position 72 of workpiece W2 are prepared as entities of DXF file. The entities are structural elements of drawing data, such as points, lines, planes, etc., each of which can have an ID and/or a name. Entities indicative of the grip positions 51, 52 are each labeled with a name of WorkGripPos, and entities indicative of the placement positions 71, 72 of workpieces are each labeled with a name of WorkCenterPos. These entities are represented by coordinates in coordinate systems of the DXF file, i.e., workpiece coordinate systems ∑93 and ∑94. When reading the workpiece drawing data, the operation program preparation device 7 searches for the entities labeled with the names of WorkGripPos and WorkCenterPos. When such entities are detected in the drawing data, the position of the workpiece in the world coordinate system ∑90, in other words, the positions of workpiece coordinate systems ∑93 and ∑94 in the world coordinate system ∑90 are input to the operation program preparation device 7, whereby the positions of entities of WorkGripPos and WorkCenterPos in the world coordinate system ∑90 are determined. Since the tool end point 2a of the operational tool 2 in the tool coordinate system ∑91 is given in advance, it is possible to determine the position and orientation of the robot with which the tool end point 2a is in coincidence with the grip position 51 or 52 of the workpiece. It is assumed here that these robot position and orientation represent %WorkGripPos% in the workpiece-type related data 41 and 42, and that %WorkApproachPos% in the workpiece-type related data 42-1 and 42-2 is represented by the orientation which is the same as that representing %WorkGripPos% and a position which is spaced by a predetermined distance from the position representing %WorkGripPos%.

Instead of inputting the positions of the workpiece coordinate systems ∑93 and ∑94 in the world coordinate system ∑90 into the operation program preparation device 7, an image of the workpiece placed on the pallet may be picked up by the camera 9 to determine the center position of the workpiece. This center position is the placement position 71 or 72 of the workpiece W1 or W2, i.e., the position of the entity associated with WorkCenterPos given by the drawing data 43-1, 43-2 of workpiece W1, W2. It is possible from such position to determine the positions of the workpiece coordinate systems ∑93 and ∑94 in the world coordinate system ∑90, and to determine %WorkApproachPos% and %WorkGripPos% in the workpiece-type related data 42-1, 42-2.

In this embodiment, there are the first operation path Ra in which the workpiece taken out of the pallet P1 is machined and then placed on the pallet P3, and the second operation path Rb in which the workpiece taken out of the pallet P2 is machined and then placed on the pallet P4. The operation-program definition data 41a, 41b are stored in the hard disk device 40 of the operation program preparation device 7 so as to correspond to the first and second operation paths Ra, Rb. Further, the workpiece-type related data 42-1 and 42-2 for each workpiece to be handled in the system of this embodiment are stored in the hard disk device 40 of the operation program preparation device 7. After the operation-program definition data 41a, 41b have once been stored, it is unnecessary to newly prepare and store such data as long as the operation paths remain unchanged. For a new workpiece, it is enough to prepare and store workpiece-type related data.

For example, the operation on the workpiece W1 according to the first operation path Ra is selected at Step 107 in FIG. 3, the operation program for the workpiece W1 is prepared on the basis of the operation-program definition data 41a and the workpiece-type related data 42-1. When the operation on the workpiece W2 according to the first operation path Ra is selected at Step 108, the operation program for the workpiece W2 is prepared on the basis of the operation-program definition data 41a and the workpiece-type related data 42-2. When the operation on the workpiece W1 according to the second operation path Rb is selected at Step 109, the operation program for the workpiece W1 is prepared on the basis of the operation-program definition data 41b and the workpiece-type related data 42-1. When the operation on the workpiece W2 according to the second operation path Rb is selected at Step 110, the operation program for the workpiece W2 is prepared on the basis of the operation-program definition data 41b and the workpiece-type related data 42-2.

In the foregoing embodiment, the operation of gripping the workpiece with the robot hand has been explained. In case that the arc welding operation is performed by the robot, it is necessary to determine, from drawing data, both a point entity indicating a welding start position and shape data indicating a welding path in term of line segment. Instead of representing the welding path in term of line segment, the welding path may be represented by a plurality of point entities on the path. In the case of the buff mounting operation being made by the robot, only shape data indicating a plane entity for use in the buff mounting operation may be determined from drawing data.

## Claims

1. An operation program preparation device (7) for preparing an operation program for a robot (1) to perform an operation on an object (W1, W2) by a tool (2) attached to the robot (1), comprising:
means (40) configured to store operation-program definition data(41a, 41b) including a first program part requiring alteration in accordance with a type of the object (W1, W2) and a second program part not requiring the alteration but kept unchanged without regard to a change in the type of the object and requiring modification of position or orientation of the tool (2), for connection with the first program part, and configured to store object-type related data (42-1, 42-2) including information on position/ orientation of the object (W1, W2);
means configured to store a predetermined rule for determining the modification for the connection between the first program part and the second program part of said operation-program definition data (41a, 41b) based on a rate of change of the position and/or the orientation of the tool (W1, W2) at the connection;
means configured to alter the first program part of said operation-program definition data (41a, 41b) based on the object-type related data (42-1, 42-2) to obtain an altered first program part; and
means configured to modify position/orientation data in the second program part of said operation-program definition data (41a, 41b) according to said predetermined rule and to combine the altered first program part and the second program part to complete the operation program.

2. An operation program preparation device (7) according to claim i, wherein the object-type related data (42-1, 42-2) are prepared based on drawing data (43-1, 43-2) of the object.

3. An operation program preparation device according to claim 1, wherein the object-type related data (42-1, 42-2) are prepared based on an image of the object (W1, W2) captured by a camera (9).

## Patentansprüche

1. Betriebsprogramm-Erstellungsvorrichtung (7) zum Erstellen eines Betriebsprogramms für einen Roboter (1), um einen Arbeitsgang an einem Objekt (W1, W2) durch ein Werkzeug (2), das an dem Roboter (1) angebracht ist, auszuführen, umfassend:
- Mittel (40), die konfiguriert sind, um Betriebsprogramm-Definitionsdaten (41a, 41b) zu speichern, umfassend einen ersten Programmteil, der eine Änderung gemäß einem Typ des Objekts (W1, W2) erfordert, und einen zweiten Programmteil, der die Änderung nicht erfordert sondern ohne Rücksicht auf eine Änderung des Typs des Objekts unverändert bleibt und eine Änderung der Position oder Orientierung des Werkzeugs (2) erfordert, zur Verbindung mit dem ersten Programmteil und konfiguriert, um Daten (42-1, 42-2) bezüglich des Objekttyps zu speichern, die Informationen über Position/Orientierung des Objekts (W1, W2) umfassen;
- Mittel, die konfiguriert sind, um eine vorbestimmte Regel zum Bestimmen der Änderung für die Verbindung zwischen dem ersten Programmteil und dem zweiten Programmteil der Betriebsprogramm-Definitionsdaten (41a, 41b) basierend auf einer Änderungsrate der Position und/oder Orientierung des Werkzeugs (W1, W2) an der Verbindung zu speichern;
- Mittel, die konfiguriert sind, um den ersten Programmteil der Betriebsprogramm-Definitionsdaten (41a, 41b) basierend auf den Daten (42-1, 42-2) bezüglich des Objekttyps zu ändern, um einen geänderten ersten Programmteil zu erzielen; und
- Mittel, die konfiguriert sind, um Positions-/ Orientierungsdaten in dem zweiten Programmteil der Betriebsprogramm-Definitionsdaten (41a, 41b) gemäß der vorbestimmten Regel zu ändern und um den geänderten ersten Programmteil und den zweiten Programmteil zu kombinieren, um das Betriebsprogramm zu vervollständigen.

2. Betriebsprogramm-Erstellungsvorrichtung (7) nach Anspruch 1, wobei die Daten (42-1, 42-2) bezüglich des Objekttyps basierend auf Zeichnungsdaten (43-1, 43-2) des Objekts erstellt werden.

3. Betriebsprogramm-Erstellungsvorrichtung nach Anspruch 1, wobei die Daten (42-1, 42-2) bezüglich des Objekttyps basierend auf einem Bild des Objekts (W1, W2) erstellt werden, das von einer Kamera (9) aufgenommen wird.

## Revendications

1. Appareil de préparation de programme d'opération (7) permettant de préparer un programme d'opération pour qu'un robot (1) réalise une opération sur un objet (W1, W2) au moyen d'un outil (2) fixé au robot (1), comprenant :
des moyens (40) configurés pour stocker des données de définition de programme d'opération (41a, 41b) comprenant une première partie de programme requérant une modification en fonction d'un type de l'objet (W1, W2) et une seconde partie de programme ne requérant pas la modification mais restant inchangée sans tenir compte d'un changement du type de l'objet et requérant un changement de la position ou de l'orientation de l'outil (2), pour la connexion avec la première partie de programme, et configurés pour stocker des données associées au type d'objet (42-1, 42-2) comprenant des informations sur la position/l'orientation de l'objet (W1, W2) ;
des moyens configurés pour stocker une règle prédéterminée pour déterminer le changement pour la connexion entre la première partie de programme et la seconde partie de programme desdites données de définition de programme d'opération (41a, 41b) sur la base d'un taux de changement de la position et/ou de l'orientation de l'outil (W1, W2) au niveau de la connexion ;
des moyens configurés pour modifier la première partie de programme desdites données de définition de programme d'opération (41a, 41b) sur la base des données associées au type d'objet (42-1, 42-2) pour obtenir une première partie de programme modifiée ; et
des moyens configurés pour modifier des données de position/d'orientation dans la seconde partie de programme desdites données de définition de programme d'opération (41a, 41b) selon ladite règle prédéterminée et pour combiner la première partie de programme modifiée et la seconde partie de programme pour réaliser le programme d'opération.

2. Appareil de préparation de programme d'opération (7) selon la revendication 1, dans lequel les données associées au type d'objet (42-1, 42-2) sont préparées sur la base de données de dessin (43-1, 43-2) de l'objet.

3. Appareil de préparation de programme d'opération selon la revendication 1, dans lequel les données associées au type d'objet (42-1, 42-2) sont préparées sur la base d'une image de l'objet (W1, W2) capturée par un appareil photo.
